# EUROPÄISCHE PATENTSCHRIFT

(11) **EP 1 510 824 B1**
(45) Veröffentlichungstag und Bekanntmachung des Hinweises auf die Patenterteilung: **13.12.2006**
(21) Anmeldenummer: 03103222.0
(22) Anmeldetag: 26.08.2003
(51) Int. Cl.: G01P 1/02, G01D 11/24, G01P 1/00

(54) **Sensoranordnung zur Messung der Drehzahl eines Rades**
Sensor arrangement for measuring the rotational speed of a wheel
Ensemble capteur pour la mesure de la vitesse angulaire d'une roue

(43) Veröffentlichungstag der Anmeldung: 02.03.2005
(73) Patentinhaber: Ford Global Technologies, LLC., Dearborn, MI 48126 (US)
(72) Erfinder: Jung, Markus, 50859, Köln (DE)
(74) Vertreter: Drömer, Hans-Carsten

(56) Entgegenhaltungen:
- GB-A- 1 455 400
- "TWO INTERNAL SNAP-IN SPEED SENSORS FOR AUTOMATIC TRANSMISSIONS" RESEARCH DISCLOSURE, KENNETH MASON PUBLICATIONS, HAMPSHIRE, GB, Nr. 402, 1. Oktober 1997 (1997-10-01), Seite 738 XP000726873 ISSN: 0374-4353
- PATENT ABSTRACTS OF JAPAN vol. 1997, no. 11, 28. November 1997 (1997-11-28) -& JP 09 175354 A (SUZUKI MOTOR CORP), 8. Juli 1997 (1997-07-08)

## Beschreibung

Die Erfindung betrifft einen Sensorfühler zur Messung der Drehzahl eines Kraftfahrzeugrades sowie eine Sensoranordnung, die einen derartigen Sensorfühler enthält.

Die Messung der Drehzahl von Kraftfahrzeugrädern ist für verschiedene Aufgaben bei der Kontrolle des Fahrzustandes und des Motors eines Kraftfahrzeuges erforderlich. Insbesondere werden Drehzahlsensoren in Verbindung mit automatischen Antiblockiersystemen (ABS) eingesetzt.

Die DE 693 18 250 T2 offenbart in diesem Zusammenhang ein Sensorsystem, bei welchem ein Permanentmagnet an der Radwelle und ein Sensorfühler am Achsschenkel der Radaufhängung befestigt wird. Wenn der Magnet bei einer Drehung der Radwelle am Sensorkopf des Sensorfühlers vorbeistreicht, wird dort von einer Hallsonde das Magnetfeld registriert und ein entsprechender Zählimpuls abgegeben. Der im Wesentlichen stabförmige Sensorkopf steckt in einer Durchgangsbohrung des Achsschenkels, wobei ein O-Ring aus Gummi für eine Abdichtung und Fixierung durch Reibung sorgt. Des Weiteren wird eine Sicherung des Sensorfühlers im montiertem Zustand durch einen nicht näher erläuterten Sicherungsbolzen erwähnt. Bei anderen bekannten Sensoranordnungen wird der Sensorfühler durch Schrauben an der Radaufhängung fixiert.

Aus dem Stand der Technik ("TWO INTERNAL SNAP-IN SPEED SENSORS FOR AUTOMATIC TRANSMISSIONS", RESEARCH DISCLOSURE, KENNETH MA-SON PUBLICATIONS, HAMPSHIRE, GB, Nr. 402, 1. Oktober 1997, Seite 738) ist eine Sensoranordnung zur Messung der Drehzahl eines Kraftfahrzeuges bekannt, wobei ein Sensorfühler mit einem stabförmigen Sensorkopf in der Bohrung eines zur Radaufhängung gehörenden Trägers eingerastet ist. Der Sensorfühler weist hierzu eine sich parallel zum Sensorkopf erstreckende Federzunge mit einem radial nach außen gerichteten Ende auf, welches nach vollständigem Durchtritt durch die Bohrung aufgrund der Federkraft nach außen gedrückt wird und die Bohrung hintergreift.

Des Weiteren zeigt die JP 09175354 A eine mehrteilige Sensoranordnung, bei welcher zunächst eine in Querrichtung geschlitzte Hülse in der Durchgangsbohrung eines Trägers im Presssitz verankert wird, so dass anschließend ein Sensorfühler mit Hilfe einer den genannten Schlitz durchgreifenden Federklammer in der Hülse fixiert werden kann.

Aus der GB 1 455 400 ist eine Sensoranordnung bekannt, bei welcher ein Sensorkopf durch eine Durchgangsbohrung eines Trägers gesteckt wird und ein radial vom Sensorkopf abstehender Ausleger durch Reibung auf einem parallel zur Durchgangsbohrung vom Träger abstehenden Bolzen festklemmt.

Vor diesem Hintergrund bestand eine Aufgabe der vorliegenden Erfindung darin, ein robusteres und leicht montierbares Sensorsystem bereitzustellen.

Diese Aufgabe wird durch eine Sensoranordnung mit den Merkmalen des Patentanspruchs 1 gelöst. Vorteilhafte Ausgestaltungen sind in den abhängigen Ansprüchen enthalten.

Der Sensorfühler der erfindungsgemäßen Sensoranordnung dient der Messung der Drehzahl eines Kraftfahrzeugrades, wobei er diesbezüglich z. B. auf bekannten Prinzipien wie der Verwendung einer Hallsonde zur Messung eines Magnetfeldes beruhen kann. Der Sensorfühler enthält einen im Wesentlichen stabförmigen Sensorkopf, welcher im montierten Zustand des Sensorfühlers in einer entsprechenden Öffnung eines zur Radaufhängung gehörenden Trägers angeordnet ist. Mit dem Sensorfühler ist ein Rastelement fest verbunden, welches den Sensorfühler in seinem montierten Zustand an dem genannten Träger fixiert.

Ein Sensorfühler der beschriebenen Bauweise hat den Vorteil, daß er besonders einfach an einer Radaufhängung montiert und im Bedarfsfalle auch wieder von diesem Element demontiert werden kann. Dabei ist keine aufwändige Verschraubung oder Befestigung von Sicherungsbolzen erforderlich. Von besonderem Vorteil ist ferner, daß aufgrund der einstückigen Verbundenheit zwischen Sensorfühler und Rastelement kein separates Teil - wie etwa eine Schraube oder ein Bolzen - vorhanden sein muß, welches einerseits in handwerklicher Feinarbeit eingesetzt werden müßte und welches andererseits das Risiko mit sich bringt, leicht verloren zu gehen.

Gemäß der erfindungsgemäßen Ausgestaltung des Sensorfühlers ist das Rastelement als Federzunge ausgebildet, die sich im Wesentlichen parallel und beabstandet zum Sensorkopf erstreckt. Vorzugsweise weist die Federzunge ein leichte Neigung zum Sensorkopf hin auf. Bei einer derartigen Anordnung können der Sensorkopf und die Federzunge einen Teil des Trägers zwischen sich einklemmen, wodurch der Sensorkopf sicher fixiert wird. Die Anordnung hat ferner den Vorteil, daß diese aufgrund der Federeigenschaften sehr tolerant gegenüber Varianzen in der Form und Dimensionierung des Trägers ist. Das Rastelement kann insbesondere aus einem Federstahl bestehen, so daß es bei entsprechender Elastizität eine hohe Haltbarkeit und Stabilität aufweist.

Vorzugsweise ist das Rastelement mit dem Sensorgehäuse stoffschlüssig verbunden. Insbesondere kann es durch Verguß im Sensorgehäuse eingebettet sein. Durch den Stoffschluß wird eine optimale Verbindung zwischen dem Sensor und dem Rastelement erreicht, welche sich darüber hinaus durch Vergießen verhältnismäßig einfach im Zuge der Herstellung des Sensorgehäuses erzeugen läßt.

Die Erfindung betrifft eine Sensoranordnung zur Messung der Drehzahl des Rades eines Kraftfahrzeuges, wobei die Sensoranordnung einen Sensorfühler der vorstehend erläuterten Art sowie einen zur Radaufhängung gehörenden Träger zur Aufnahme des Sensorfühlers enthält. Der Träger ist weiterhin dadurch gekennzeichnet, daß dieser eine Öffnung zur Aufnahme des Sensorkopfes des Sensorfühlers sowie eine sich im Wesentlichen parallel zu dieser Öffnung erstreckende Ausnehmung zur Aufnahme des Rastelementes des Sensorfühlers aufweist. Bei einer derartigen Sensoranordnung kann der Sensorfühler mit seinem Sensorkopf in die Öffnung gesteckt werden, wobei gleichzeitig das Rastelement in der Ausnehmung des Trägers einrastet und den Sensorfühler hierdurch fixiert. Durch den Eingriff des Rastelementes in einer hierfür vorgesehenen Ausnehmung wird zudem die Winkelausrichtung des Sensorfühlers festgelegt, so daß die im Sensorkopf enthaltene Sonde "automatisch" richtig ausgerichtet wird.

Die Ausnehmung des Trägers weist vorzugsweise mindestens eine radiale Vertiefung auf, in welche das Rastelement eingreifen kann. In diesem Zusammenhang definiert die Längserstreckung des Sensorkopfes eine "axiale" Richtung, wobei die hierzu senkrechten Richtungen als "radial" bezeichnet werden. Die solchermaßen in Bezug auf den Sensorkopf beziehungsweise die Öffnung des Trägers definierten Richtungen gelten analog auch für die parallel zur Öffnung liegende Ausnehmung. Durch das Eingreifen des Rastelementes in eine radiale Vertiefung der Ausnehmung wird eine Fixierung des Sensorfühlers gegenüber axialen Bewegungen, d. h. gegenüber einem Herausziehen des Sensorkopfes aus der Öffnung des Trägers erreicht.

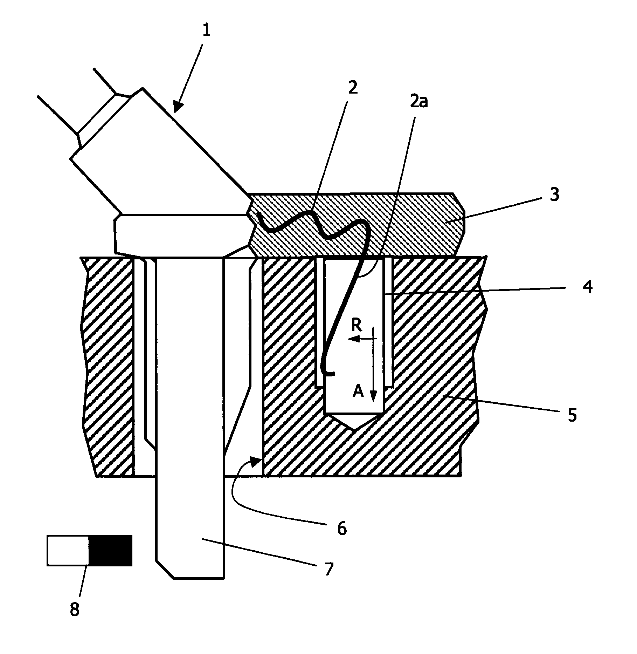

Die einzige Figur zeigt einen erfindungsgemäßen Sensorfühler im an einen Träger montierten Zustand in einer teilweise geschnittenen Ansicht.

Der in der Figur schematisch dargestellte Sensorfühler 1 dient der Messung der Raddrehzahl, deren Kenntnis zum Beispiel von einem Antiblockiersystem benötigt wird. Der Sensorfühler 1 weist einen im Wesentlichen stabförmigen Sensorkopf 7 auf, welcher durch eine zylindrische Durchgangsöffnung 6 eines Trägers 5 gesteckt ist. Der Träger 5 ist ein nicht rotierendes Teil der Radaufhängung, beispielsweise der Achsschenkel. Der aus der Durchgangsöffnung 6 hervorstehende Teil des Sensorkopfes 7 ist im dargestellten Zustand so positioniert, daß er einem Permanentmagneten 8 nahe kommt. Der Magnet 8 ist in nicht näher dargestellter Weise mit einem rotierenden Teil des Rades wie z. B. der Radwelle verbunden. Bei jeder Umdrehung des Rades streicht der Magnet 8 somit einmal am Sensorkopf 7 vorbei, so daß eine darin angeordnete Hallsonde (nicht dargestellt) das Magnetfeld registrieren und einen Zählimpuls abgeben kann.

Zur Montage und Fixierung des Sensorfühlers 1 am Träger 5 ist erfindungsgemäß ein Clip- beziehungsweise Rastmechanismus vorgesehen. Dieser umfaßt ein fest mit dem Sensorfühler 1 verbundenes Rastelement 2, das als eine Klammer aus gebogenem Federstahl ausgebildet ist. Das Rastelement 2 ist mit einem Ende in einem radialen Ausleger 3 des Sensorgehäuses durch Verguß eingebettet. Das als Federzunge 2a ausgebildete andere Ende des Rastelements 2 ragt aus dem Sensorgehäuse 3 heraus und erstreckt sich im Wesentlichen parallel zum stabförmigen Sensorkopf 7, d. h. definitionsgemäß in axialer Richtung A. Vorzugsweise hat es eine leichte, auf den Sensorkopf 7 zu weisende Neigung.

Die freistehende Federzunge 2a ist wie dargestellt im montierten Zustand in eine Gewindebohrung 4 eingeführt, die sich im Träger 5 parallel zur Durchgangsöffnung 6 erstreckt. Die Gewindefurchen stellen dabei Vertiefungen in radialer Richtung R (d. h. senkrecht zur axialen Richtung A) dar, in welche die Federzunge 2a bei der Montage des Sensorfühlers 1 einrasten kann. Der Sensorfühler wird hierdurch in der erreichten Endposition axial gegen ein ungewolltes Herausziehen fixiert. Anstelle des Gewindes könnte die Ausnehmung 4 auch eine Nut, einen Absatz oder eine sonstige Hinterschneidung enthalten, in welcher die Federzunge 2a einrasten könnte. Das Rastelement 2 ist im Übrigen so dimensioniert, daß der zwischen ihm und dem Sensorkopf 7 liegende Bereich des Trägers 5 eingeklemmt wird, wodurch ein sicherer Sitz des Sensorfühlers 1 gewährleistet ist.

## Patentansprüche

1. Sensoranordnung zur Messung der Drehzahl eines Kraftfahrzeugrades, enthaltend
- einen Sensorfühler (1) mit einem im Wesentlichen stabförmigen Sensorkopf (7), wobei mit dem Sensorfühler (1) ein Rastelement (2) in Form einer sich im Wesentlichen parallel und beabstandet zum Sensorkopf (7) erstrekkenden Federzunge (2a) verbunden ist;
- einen zur Radaufhängung gehörenden Träger (5) für den Sensorfühler (1), wobei der Träger (5) eine Öffnung (6) zur Aufnahme des Sensorkopfes (7) aufweist;
**dadurch gekennzeichnet, daß**
der Träger (5) eine sich parallel zu der Öffnung (6) erstreckende Ausnehmung (4) zur Aufnahme des Rastelementes (2) aufweist.

2. Sensoranordnung nach Anspruch 1,
**dadurch gekennzeichnet, daß**
die Ausnehmung (4) des Trägers (5) mindestens eine radiale Vertiefung aufweist, in welche das Rastelement (2) eingreifen kann.

3. Sensoranordnung nach Anspruch 1 oder 2,
**dadurch gekennzeichnet, daß**
das Rastelement (2) aus Federstahl besteht.

4. Sensoranordnung nach mindestens einem der Ansprüche 1 bis 3,
**dadurch gekennzeichnet, daß**
das Rastelement (2) mit dem Sensorgehäuse (3) stoffschlüssig verbunden ist.

5. Sensoranordnung nach Anspruch 4,
**dadurch gekennzeichnet, daß**
das Rastelement (2) im Sensorgehäuse (3) durch Verguß eingebettet ist.

## Claims

1. Sensor arrangement for measuring the rotational speed of a motor vehicle wheel, containing,
- a sensor (1) having an essentially rod-shaped sensor head (7), a latching element (2) in the form of a spring tongue (2a) which extends essentially parallel to and a distance from the sensor head (7) being connected to the sensor (1);
- a carrier (5), associated with the wheel suspension, for the sensor (1), the carrier (5) having an opening (6) for receiving the sensor head (7);
**characterized in that**
the carrier (5) has a recess (4) which extends parallel to the opening (6) and has the purpose of receiving the latching element (2).

2. Sensor arrangement according to Claim 1,
**characterized in that**
the recess (4) of the carrier (5) has at least one radial depression into which the latching element (2) can engage.

3. Sensor arrangement according to Claim 1 or 2,
**characterized in that**
the latching element (2) is composed of spring steel.

4. Sensor arrangement according to at least one of Claims 1 to 3,
**characterized in that**
the latching element (2) is connected to the sensor housing (3) in a materially joined fashion.

5. Sensor arrangement according to Claim 4,
**characterized in that**
the latching element (2) is embedded in the sensor housing (3) by casting.

## Revendications

1. Arrangement de détection pour mesurer la vitesse de rotation d'une roue de véhicule automobile comprenant
- une sonde de détection (1) munie d'une tête de détection (7) essentiellement en forme de tige, un élément d'enclenchement (2) sous la forme d'une languette élastique (2a) s'étendant pour l'essentiel parallèlement et à une certaine distance de la tête de détection (7) étant relié avec la sonde de détection (1) ;
- un support (5) pour la sonde de détection (1) faisant partie de la suspension de roue, le support (5) présentant une ouverture (6) pour recevoir la tête de détection (7) ;
**caractérisé en ce que** le support (5) présente un creux (4) qui s'étend parallèlement à l'ouverture (6) et qui est destiné à recevoir l'élément d'enclenchement (2).

2. Arrangement de détection selon la revendication 1, **caractérisé en ce que** le creux (4) du support (5) présente au moins un enfoncement radial dans lequel peut venir en prise l'élément d'enclenchement (2).

3. Arrangement de détection selon la revendication 1 ou 2, **caractérisé en ce que** l'élément d'enclenchement (2) est en acier à ressort.

4. Arrangement de détection selon au moins l'une des revendications 1 à 3, **caractérisé en ce que** l'élément d'enclenchement (2) est relié avec le boîtier du capteur (3) par fusion des matériaux.

5. Arrangement de détection selon la revendication 4, **caractérisé en ce que** l'élément d'enclenchement (2) est encastré dans le boîtier du capteur (3) par enrobage.
